# EUROPEAN PATENT APPLICATION

(11) **EP 1 059 636 A2**
(43) Date of publication of application: **13.12.2000**
(21) Application number: 00112247.2
(22) Date of filing: 07.06.2000
(51) Int. Cl.: G11B 20/10

(54) **Recording medium, reproducing apparatus, reproducing method, recording apparatus, and recording method**

(30) Priority: 10.06.1999 JP 16444799
(71) Applicant: SONY CORPORATION, Tokyo (JP)
(72) Inventor: Sako, Yoichiro, c/o Sony Corporation, Tokyo (JP)
(74) Representative: Melzer, Wolfgang, Dipl.-Ing.

(57) **Abstract**

A recording medium, a recording apparatus and method, and a reproducing apparatus and method are disclosed herein. The recording medium has n recording regions, in which n trains of sampled data items are recorded, respectively. Any sampled data item of each train being an n-th item generated from the input analog audio signal. The recording apparatus and method are designed to record n trains of sampled data items in the n recording regions of the recording medium. The reproducing apparatus and method are designed to reproduce the n trains of sampled data items from the n recording regions of the recording medium.

## Description

### BACKGROUND OF THE INVENTION

### [Field of the Invention]

The present invention relates to a recording medium having n recording regions in which n trains of sampled data items are recorded, respectively, such that the sampled data items of any train may not overlap the sampled data items of other trains. The sampled data items having been generated by sampling and quantizing an input analog audio signal at a sampling frequency of n × fs (KHz), and any sampled data item of each train is an n-th item generated from the input analog audio signal. The invention also relates to an apparatus and method for reproducing the sampled data items from the recording medium and an apparatus and method for recording the sampled data items on the recording medium.

### [Prior Art]

Digital audio data is recorded on compact disks (CDs: trademark) which are widely used at present as recording media for high-quality sound. The quality of the sound represented by the audio data depends on two major factors. The first factor is the quantization bit number. The second factor is sampling frequency. The digital audio data recorded on a compact disk is one that has been sampled at 44.1 KHz, filtering out signals of 20 KHz or more by means of a low pass filter. This is because the upper limit of human audio-frequency range is said to be 20 KHz.

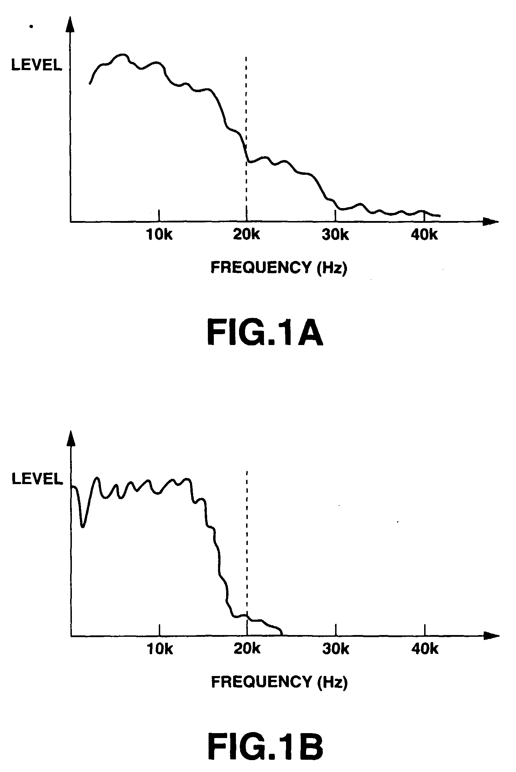

Actually, however, classic musical performance, for example, produces sounds that have frequencies, the highest of which is 40 KHz as is illustrated in FIG. 1A. Pops musical performance also produces sounds, some of which have such high frequencies as exceed 20 KHz. It is pointed out that the digital audio data generated by cutting any sound having a frequency equal to or higher than 20 KHz is dissatisfactory in terms of the quality of the sound reproduced from it.

Recently, two new standards have been proposed, called "next-generation CD standards." On new standard is to record audio data on a digital versatile disk or a digital video disk (DVD) at sampling frequency of 96 KHz and quantization bit number of 24. The other new standard is to record audio data on a super audio CD (SACD) at sampling frequency of 2.822 MHz and quantization bit number of 1, so that high-quality sound may reproduced from the super audio CD.

Audio data is reproduced from the next-generation CDs by means of a laser, optical system, signal-processing system and the like of totally new type. Most conventional apparatus for reproducing audio data from the conventional CDs cannot reproduce audio data from the next-generation CDs. The hybrid disk that accords with the SACD standard is composed of two layers. One layer serves as a CD part, whereas the other layer serves as a high-density recording part. The conventional CD player can reproduced the audio data recorded on the CD part, but cannot reproduce the audio data recorded on the high-density recording part. To enjoy listening to the high-quality sound recorded on the high-density recording part, the user needs spend money to buy an SACD player that accords with the above-mentioned SACD standard.

### BRIEF SUMMARY OF THE INVENTION

The present invention has been made in consideration of the foregoing. The object of the invention is to provide a data-recording medium from which the conventional CD player can reproduce sound of the same quality as from the conventional CD and from which the new player can reproduce sound of higher quality.

Another object of this invention is to provide an apparatus and method which are basically the same as the conventional recording apparatus and method and have only a new component and only a new step, respectively, and which can record data on the above-mentioned data-recording medium.

Still another object of the invention is to provide an apparatus and method which are basically the same as the conventional reproducing apparatus and method and which can yet reproduce data from the above-mentioned data-recording medium.

A recording medium according to this invention has n recording regions (n is an integer defined as: n ≥ 2) in which n trains of sampled data items are recorded, respectively, such that the sampled data items of any train may not overlap the sampled data items of other trains. The sampled data items have been generated by sampling and quantizing an input analog audio signal at a sampling frequency of n × fs (KHz), and any sampled data item of each train being an n-th item generated from the input analog audio signal.

Another recording medium according to this invention has n recording regions (n is an integer defined as: n ≥ 2) in which n trains of sampled data items are recorded, respectively, such that the sampled frame data items of any train may not overlap the sampled frame data items of other trains. The sampled frame data items have been generated by sampling and quantizing an input analog video signal at a sampling frequency of n × fs (KHz) (where fs is frame frequency) and any sampled frame data item of each train being an n-th frame generated from the input analog video signal.

A reproducing apparatus according to the present invention is designed to reproduce an audio signal from a recording medium having n recording regions (n is an integer defined as: n ≥ 2) in which n trains of sampled data items are recorded, respectively, such that the sampled data items of any train may not overlap the sampled data items of other trains. The sampled data items have been generated by sampling and quantizing an input analog audio signal at a sampling frequency of n × fs (KHz), and any sampled data item of each train being an n-th item generated from the input analog audio signal. The apparatus comprises: selecting means for selecting a high-quality sound reproducing mode and a low-quality sound reproducing mode; reproducing means for reproducing the analog audio signal from the n recording regions of the recording medium; and control means for controlling the reproducing means so that the reproducing means reproduces the analog audio signal from the trains of sampled data items recorded in m desired recording regions (m is an integer defined as: 2 ≤ m ≤ n) of the recording medium when a user selected the high-quality sound reproducing mode, and reproduces the analog audio signal from the trains of sampled data items recorded in k desired recording regions (k is an integer defined as: 1 ≤ k ≤ m) of the recording medium when the user selected the low-quality sound reproducing mode.

A reproducing apparatus for reproducing a video signal from a recording medium having n recording regions (n is an integer defined as: n ≥ 2) in which n trains of sampled data items are recorded, respectively, such that the sampled frame data items of any train may not overlap the sampled frame data items of other trains. The sampled frame data items have been generated by sampling and quantizing an input analog video signal at a sampling frequency of n × fs (KHz) (where fs is frame frequency) and any sampled frame data item of each train being an n-th frame generated from the input analog video signal. The reproducing apparatus comprises: selecting means for selecting a high-quality image reproducing mode and a low-quality image reproducing mode; reproducing means for reproducing the analog video signal from the n recording regions of the recording medium; and control means for controlling the reproducing means so that the reproducing means reproduces the analog video signal from the trains of sampled frame data items recorded in m desired recording regions (m is an integer defined as: 2 ≤ m ≤ n) of the recording medium when a user selected the high-quality image reproducing mode, and reproduces the analog video signal from the trains of sampled fame data items recorded in k desired recording regions (k is an integer defined as: 1 ≤ k ≤ m) of the recording medium when the user selected the low-quality image reproducing mode.

A recording apparatus for recording an audio signal on a recording medium having n recording regions (n is an integer defined as: n ≥ 2). The recording apparatus comprising: sampling means for sampling and quantizing an input analog audio signal at a sampling frequency of n × fs (KHz), generating trains of sampled data items; data-dividing means for dividing the trains of sampled data items generated by the sampling means, thereby forming n trains of sampled data items, any sampled data item of each train being an n-th item generated from the input analog audio signal; signal-processing means for processing each of the n trains of sampled data items formed by the data-dividing means; and recording means for recording the n trains of sampled data items processed by the signal-processing means, in the n recording regions (n is an integer defined as: n ≥ 2), respectively.

A recording apparatus for recording a video signal on a recording medium having n recording regions (n is an integer defined as: n ≥ 2). The recording apparatus comprises: frame-forming means for sampling and quantizing an input analog video signal at a sampling frequency of n × fs (KHz), generating trains of sampled frame data items; data-dividing means for dividing the trains of sampled frame data items generated by the frame-forming means, thereby forming n trains of sampled frame data items, any sampled frame data item of each train being an n-th item generated from the input analog audio signal; signal-processing means for processing each of the n trains of sampled frame data items formed by the data-dividing means; and recording means for recording the n trains of sampled frame data items processed by the signal-processing means, in the n recording regions (n ≥ 2), respectively.

When a conventional CD player reproduces the audio data recorded on the data-recording medium according to the invention, high-quality sound can be generated from the audio data.

The present invention can provide an apparatus and method which are basically the same as the conventional recording apparatus and method and have only a new component and only a new step, respectively, and which can record data on the above-mentioned data-recording medium.

Further, the invention provide an apparatus and method which are basically the same as the conventional reproducing apparatus and method and have only a new component and only a new step, respectively, and which can reproduce data from the above-mentioned data-recording medium.

Moreover, this invention provide an apparatus and method which are basically the same as the conventional recording/reproducing apparatus and method and have only a new component and only a new step, respectively, and which can record data on, and reproduce data from, the above-mentioned data-recording medium.

### BRIEF DESCRIPTION OF THE SEVERAL VIEWS OF THE DRAWING

FIG. 1A is a diagram showing the band characteristic of an audio signal whose frequency is nearly 40KHz at most;
FIG. 1B is a diagram representing the band characteristic of an audio signal whose frequency is nearly 20 KHz at most;
FIG. 2 is a sectional view of a two-layered, disk-shaped recording medium;
FIG. 3 is a diagram explaining how laser beam are applied from two pickups to the layers of the two-layered recording medium shown in FIG. 2;
FIG. 4 is a block diagram showing a recording apparatus and a reproducing apparatus, both according to the present invention;
FIG. 5 is a diagram depicting the even-numbered digital data items and the odd-numbered digital data items, which have been generated by sampling an audio signal with a sampling frequency of 2 × fs (KHz);
FIG. 6 is a diagram explaining how a laser beam is applied from one pickups to the layers of the two-layered recording medium shown in FIG. 2;
FIG. 7 is a block diagram of a reproducing apparatus according to the present invention;
FIG. 8A is a timing chart showing a timing of switching the process of reproducing data from the two-layered recording medium of FIG. 7, from one layer tot the other layer and vice versa;
FIG. 8B is a timing chart illustrating another timing of switching the process of reproducing data from the two-layered recording medium of FIG. 7, from one layer tot the other layer and vice versa;
FIG. 8C is a timing chart showing the timing of switching the process of reproducing data from a five-layered recording medium, from one layer to another and vice versa;
FIG. 9A is a frequency characteristic diagram for explaining aliasing;
FIG. 9B is another frequency characteristic diagram for explaining aliazing;
FIG. 10 is a block diagram of a recording apparatus according to the present invention;
FIG. 11 is a diagram explaining how a missing part of the digital data recorded on one layer of a two-layered recording medium is interpolated with the digital data recorded on the other layer of the recording medium; and
FIG. 12 shows a recording medium according to the present invention.

### DETAILED DESCRIPTION OF THE INVENTION

The data-recording medium, a recording apparatus, a recording method, a reproducing apparatus and a recording method, all being embodiments of the invention, will be described, with reference to the accompanying drawings.

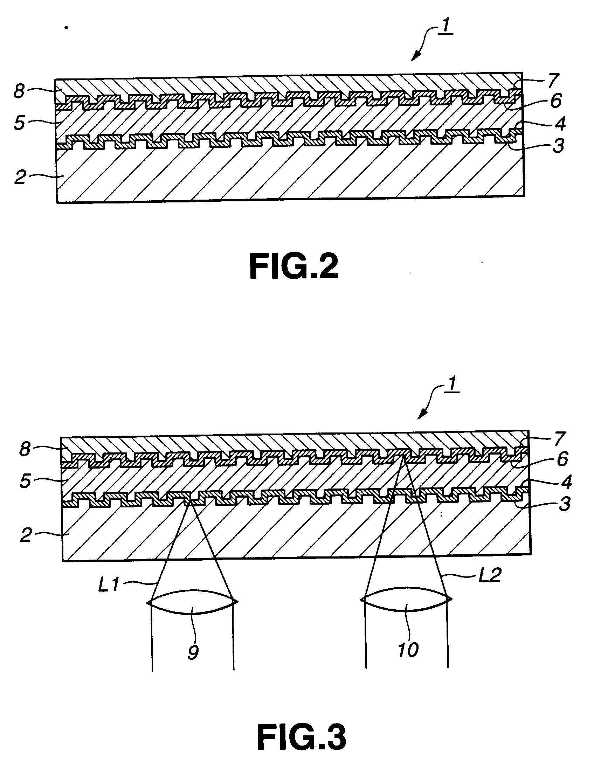

An optical disk 1 having two recording layers (hereinafter referred to as "two-layered optical disk"), which is an embodiment of the data-recording medium, will be described. FIG. 2 is a sectional view o the two-layered optical disk 1. As shown in FIG. 2, the two-layered optical disk 1 has the first recording layer 3 and the second recording layer 6, on which digital audio signals are recorded. The audio signals have been generated by sampling an audio signal from a sound source at a sampling frequency of 88.2 KHz. Each of the audio signals consists of 16 quantized bits. More precisely, the even-numbered digital audio signals are recorded on the first recording layer 3, while the odd-numbered digital audio signals are recorded on the second recording layer 6.

As shown in FIG. 2, the two-layered optical disk 1 comprises a disk substrate 2, a semitransparent reflection film 4, an intermediate layer 5, a reflection film 7, and a protection layer 8. The substrate 2 is made of transparent synthetic resin such as polycarbonate. The first recording layer 3 is provided on the major surface of the disk substrate 2. The semitransparent reflection film 4 is formed on the first recording layer 3 and a thin dielectric film made of, for example, silicon nitride (SiN₂). The intermediate layer 5 is provided on the reflection film 4 and has the second recording layer 6 on the surface facing away from the reflection film 4. A train of pits is made in the surface of the second recording layer 6. The reflection film 7 is formed on the second recording layer 6 and made of, for example, aluminum (Al). The protection layer 8 is provided on the reflection film 7.

The audio data items recorded on the first recording layer 3 is the even-numbered ones of the data items obtained by sampling the source sound at the sampling frequency of 88.2 KHz. The audio data items recorded on the second recording layer 6 are the odd-numbered ones of said data items. In other words, the second, fourth, sixth sampled data items and so on are recorded on the first recording layer 3, and the first, third, fifth sampled data items and so on are recorded on the second recording layer 6. Hence, the audio data recorded on the first recording layer 3 has a sampling frequency of 44.1 KHz, and the audio data recorded on the second recording layer 6 has a sampling frequency of 44.1 KHz, too.

The audio data recorded on either recording layer can be reproduced by the apparatus for reproducing data from the conventional compact disks. The audio data recorded on each recording layer can be reproduced, providing audio signals that represent music. The audio signals reproduced from each recording layer can be processed by the same method as in the conventional CD players. Even if a CD player fails to read audio signals from both recording layers 3 and 6, the audio signals read from only one recording layer will represent full and complete music.

As indicated above, of the digital audio signals generated by sampling the source sound at the sampling frequency of 2 × fs (KHz), the even-numbered ones, forming a data train, are recorded on one of the two recording layers, while the odd-numbered ones, forming another data train, are recorded on the other of the two recording layers. It follows that the digital audio signals recorded on each of the recording layers are of a sampling frequency of fs (MHz) are recorded on each of the recording layers. Hence, a reproducing apparatus designed to reproduce digital audio signals generated by sampling source sound at a sampling frequency of fs (MHz) can reproduce the digital audio signals recorded on either recording layer, because the signals recorded have a sampling frequency of fs (MHz).

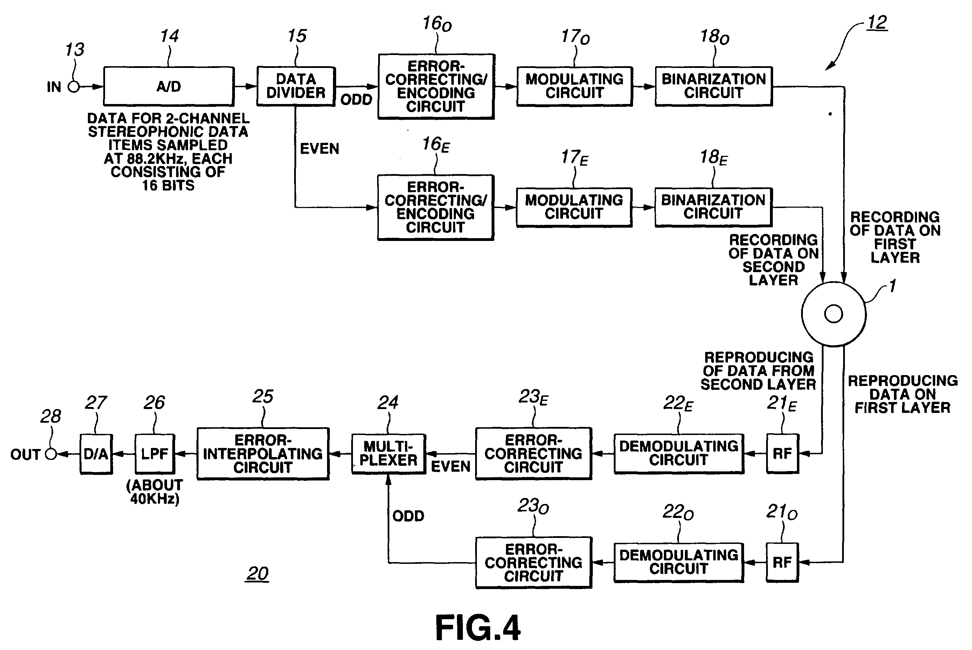

A recording apparatus for recording audio data on the two-layered optical disk 1 and a reproducing apparatus for reproducing the audio data from the two-layered optical disk 1 will be described, with reference to FIGS. 3 and 4. FIG. 3 is a diagram explaining how laser beam are applied from two pickups to the layers of the two-layered optical disk 1 shown in FIG. 1. FIG. 4 is a block diagram of the recording apparatus 12 and the reproducing apparatus 20.

The recording apparatus 12, which is designed to record audio data on the two-layered disk 1, will be described first. In the recording apparatus 12, the objective lenses 9 and 10 of two pickups focus data-recording laser beams. The laser beams thus focused are applied to the first recording layer 3 and second recording layer 6 of the disk 1, respectively, thereby recording audio data on the recording layers 3 and 6.

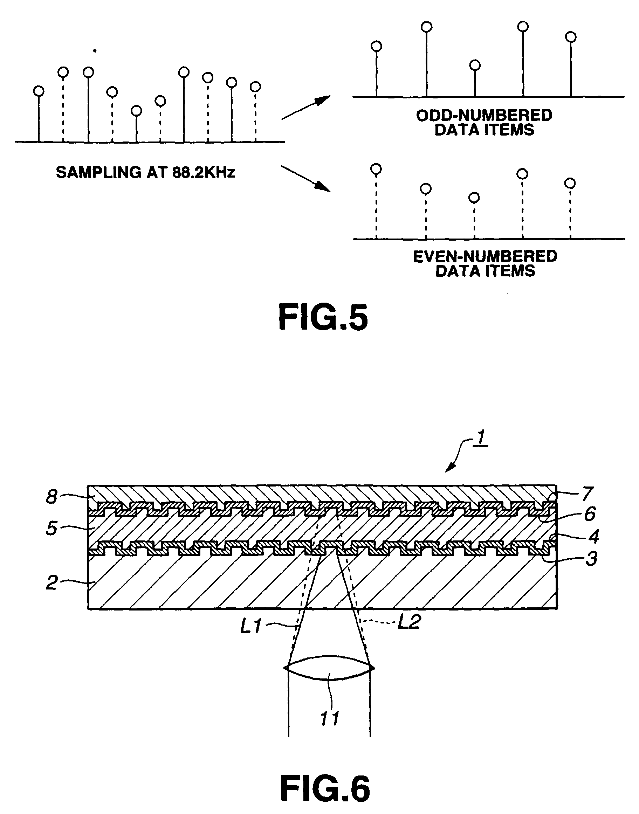

More specifically, an analog audio signal is supplied from a sound source to an A/D converter 14 through an input terminal 13, both provided in the recording apparatus 12. The A/D converter 14 performs sampling on the analog audio signal at a sampling frequency of 88.2 KHz, or 2 × 44.1 KHz, generating digital audio data items for a two-channel stereophonic player, each consisting of 16 bits. The digital audio data items are input to a data divider 15. The data divider 15 divides the digital audio data items into odd-numbered ones and even-numbered ones, as is illustrated in FIG. 5. Therefore, the odd-numbered audio data items are equivalent to those sampled at frequency of 44.1 KHz, and so are the even-numbered audio data items.

The odd-numbered audio data items (ODD) are supplied to an error-correcting/encoding circuit 16_{O} and thence to a modulating circuit 17_{O}.

The error-correcting/encoding circuit 16_{O} performs encoding on the odd-numbered audio data items. The encoding is, for example, a combination of cross interleaving and fourth-order Read-Solomon coding, by using the algorithm of cross interleave Read-Solomon coding (CIRC).

The modulating circuit 17_{O} effects modulation on the coded output of the error-correcting/encoding circuit 16_{O}, in accordance with the EFM (eight-to-fourteen modulation) algorithm.

The modulated output of the modulating circuit 17_{O} is supplied to a binarization circuit 18_{O}. The circuit 18_{O} converts the modulated output to binary data that will be recorded on the first recording layer 3 of the two-layered optical disk 1.

The binary data is supplied to the first pickup that has the objective lens 9 shown in FIG. 3. The binary data is recorded on the two-layered optical disk 1 as the pickup applies a data-recording laser beam to the disk 1 being rotated, thereby forming the first recording layer 3.

Meanwhile, the even-numbered audio data items (EVEN) are supplied to an error-correcting/encoding circuit 16_{E}, thence to a modulating circuit 17_{E} , that performs EFM, and then to a binarization circuit 18_{E}.

The binarization circuit 18_{E} generates binary data. The binary data is supplied to the second pickup that has the objective lens 10 shown in FIG. 3. The binary data is recorded on the two-layered optical disk 1 as the pickup applies a data-recording laser beam to the disk 1 being rotated, thereby forming the second recording layer 6.

The reproducing apparatus 20, which is designed to reproduce audio data from the two-layered optical disk 1, will now be described. As shown in FIG. 3, the reproducing apparatus 20 has two pickups, too. In the apparatus 20, the objective lenses 9 and 10 of the pickups focus data-reproducing laser beams. The laser beams thus focused are applied to the first recording layer 3 and second recording layer 6 of the disk 1, respectively, thereby reproducing audio data from the recording layers 3 and 6.

More specifically, the first pickup reads an audio signal from the first recording layer 3 of the two-layered optical disk 1 being rotated. The audio signal is supplied to an RF circuit 21_{O}, thence to a demodulating circuit 22_{O}, and further to an error-correcting circuit 23_{O}.

The RF circuit 21_{O} performs RF process on the signal read by the first pickup, generating an RF signal. The RF signal is supplied to the demodulating circuit 22_{O}. The demodulating circuit 22_{O} demodulates the RF signal, which is supplied to the error-correcting circuit 23_{O}. The error-correcting circuit 23_{O} decodes the demodulated RF signal, by means of CIRC, generating odd-numbered audio data items. The odd-numbered audio data items (ODD) are supplied to a multiplexer 24.

In the meantime, the second pickup reads an audio signal from the second recording layer 6. The audio signal is supplied to an RF circuit 21_{E}, thence to a demodulating circuit 22_{E}, and further to an error-correcting circuit 23_{E}. The even-numbered audio data items (EVEN) generated by the error-correcting circuit 23_{E} are supplied to a multiplexer 24.

The multiplexer 24 multiplexes the odd-number audio data items and the even-numbered audio data items, thus generating audio data. The audio data has a sampling frequency of 88.2 KHz. This is because the odd-number audio data items and the even-numbered audio data items have been obtained by dividing the digital audio data having a sampling frequency of 88.2 KHz and therefore have a sampling frequency of 44.1 KHz. The output of the multiplexer 24 is supplied to an error-interpolating circuit 25.

The error-interpolating circuit 25 detects and interpolates the errors that the error-correcting circuits 23_{O} and 23_{E} have failed to correct, as will be described later in detail. The output of the error-interpolating circuit 25 is supplied to a low pass filter (LPF) 26.

The LPF 26 effects filtering on the output of the error interpolating circuit 25, using a cut-off frequency of about 40 KHz. The output of the LPF 26 is supplied to a D/A convener 27. The D/A converter 27 converts the digital audio data, obtained thus far, to an analog audio signal. The analog audio signal is output from the reproducing apparatus 20 through an output terminal 28.

Therefore, the reproducing apparatus shown in FIG. 4 can reproduce a digital audio signal which has a sampling frequency of 88.2 KHz and which therefore represents sound of high quality. Moreover, the multiplexer 24 may not multiplex the odd-numbered audio data items and the even-numbered audio data items. Even in this case, the sound generated from the odd-numbered audio data items can have adequately natural aural properties, and the sound generated from the even-numbered audio data items can have sufficiently natural aural properties.

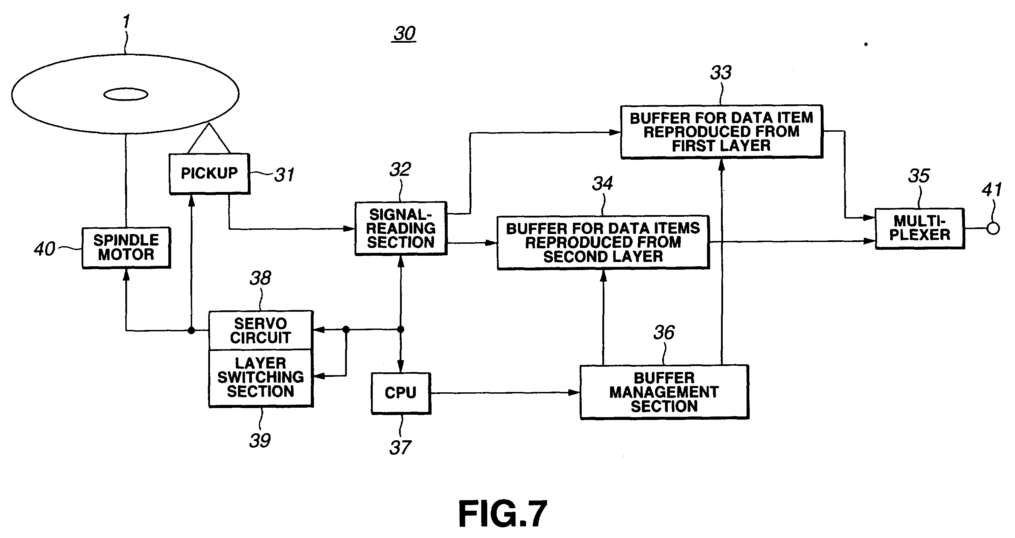

Another embodiment of the reproducing apparatus described above will be described, with reference to FIGS. 6 and 7. As shown in FIG. 6, this reproducing apparatus 30 has one pickup and is designed to reproduce an audio signal from the two-layered optical disk 1.

The reproducing apparatus 30 comprises a pickup 31, a signal-reading section 32, two buffer memories 33 and 34, a multiplex (MUX) section 35, a buffer management section 36, and a servo circuit 38. The pickup 31 and the signal-reading section 32 constitute data-reading means for reading digital audio data from the two-layered optical disk 1. The buffer memory 33 is provided to store the digital audio data the data-reading means has read from the first recording layer 3 of the disk 1. The buffer memory 34 is provided to store the digital audio data the data-reading means has read from the second recording layer 6 of the disk 1. The buffer management section 36 controls the writing of data into, and the reading of data from, the buffer memories 33 and 34. The MUX section 35 multiplexes the outputs of the buffer memories 33 and 34. The servo circuit 38 is designed to move the pickup 31 to a target track on the two-layered optical disk 1. The reproducing apparatus 30 further comprises a layer-switching section 39 and a spindle motor 40. The layer-switching section 39 is provided to switch the data-reproducing laser the pickup 31 emits, from the beam to be applied to the first recording layer 3 to the one to be applied to the second recording layer 6, or other way around. The spindle motor 40 rotates the two-layered optical disk 1 under the control of the servo circuit 38.

The reproducing apparatus 30 further comprises a central processing unit (CPU) 37. The CPU 37 determines whether audio signals should be reproduced from the first recording layer 3 or the second recording layer 6, for from both, whether the signals read from the two recording layers should be mixed or not, and whether data should be reproduced from an optical disk such as the conventional CD, in accordance with the user instructions or the type of the disk used. Based on what it has determined, the CPU 37 controls the servo circuit 38, layer-switching section 39, signal-reading section 32 and buffer management section 36.

In the reproducing apparatus 30, the pickup 31 reads a signal from the two-layered optical disk 1 and supplies the signal to the signal-reading section 32. The control signals supplied from the servo circuit 38 and layer- switching section 39 control the pickup 31, causing the pickup 31 to make an access to either the first recording layer 3 or the second recording layer 6.

The signal-reading section 32 performs RF process, demodulation, error correction and the like on the signals supplied from the pickup 31, i.e., the signals read from the first recording layer 3 and second recording layer 6. The signals read form the first recording layer 3 and processed by the signal-reading section 32 are supplied to the buffer memory 33. The signals read form the second recording layer 6 and processed by the signal-reading section 32 are supplied to the buffer memory 34.

The buffer memory 33 stores the odd-numbered data items read from the first recording layer 3 and the odd-numbered data items to be written into the first recording layer 3. On the other hand, the buffer memory 34 stores the even-numbered data items read from the second recording layer 6 and the odd-numbered data items to be written into the second recording layer 6. The buffer management section 36 controls both buffer memories 33 and 34. The writing of data into the buffer memories 33 and 34 and the reading of data therefrom are thereby managed.

How the reproducing apparatus 30 operates will be described below in detail. The user may give the instruction that audio signals be reproduced from the first recording layer 3 only. From this instruction the CPU 37 determines that the audio signals recorded on the first recording layer 3 should be reproduced. The CPU 37 controls the servo circuit 38 and the layer-switching section 39, whereby the pickup 31 applies a data-reproducing laser beam to the two-layered optical disk 1 being rotating, driven by the spindle motor 40. The light reflected from the first recording layer 3 is applied to the signal-reading section 32. The signal-reading section 32 performs the prescribed process, decoding the odd-numbered audio data items. The odd-numbered audio data items are stored into the buffer memory 33 under the control of the buffer management section 36. Eventually, the odd-numbered audio data items are read from the buffer memory 33 and output from the apparatus 30 through the multiplexer 35 and the output terminal 41. The odd-numbered audio data items are convened to an analog audio signal, as they are processed by an error-interpolating circuit, a LPF and a D/A convener, which are of the same types as the circuit 25 , LPF 26 and D/A converter 27, all illustrated in FIG. 4.

The user may give the instruction that audio signals be reproduced from the second recording layer 6 only. If this is the case, an analog audio signal is generated from the even-numbered audio data items by performing the same processes as in the case of generating an analog audio signal from the odd-numbered audio data items.

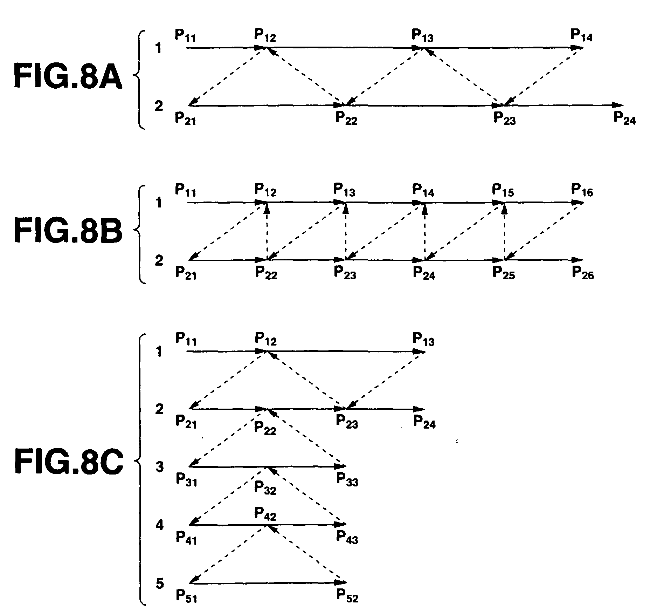

Suppose the user gives the instruction that audio signals be reproduced from both the first recording layer 3 and the second recording layer 6. Then, the audio signals recorded on the two recording layers 3 and 6 will be reproduced and multiplexed. The CPU 37, therefore, determines that the audio signals recorded on the two recording layers 3 and 6 should be reproduced and multiplexed. The CPU 37 then controls the servo circuit 38 and the layer-switching section 39, whereby the laser beam is applied from the pickup 31, alternately to the first recording layer 3 and the second recording layer 6. The timing of switching the first recording layer 3 to the second recording layer 6, and vice versa, is as follows. First, an audio signal is reproduced from the first recording layer 3. Next, an audio signal is reproduced from the second recording layer 6, starting at a time before an audio signal is completely reproduced from first recording layer 3. After the audio signal is completely reproduced from the first recording layer 3 and before the audio signal is completely reproduced from the second recording layer 3, the reproduction of another audio signal starts on the first recording layer 3. More precisely, as shown in the timing chart of FIG. 8A, a first signal is reproduced from the recording first layer 3 during the period between time P₁₁ and time P₁₂. A second signal is reproduced from the second recording layer 6 during the period between P₂₁ and time P₂₂, which precedes and follows the time P₁₂, respectively. A third signal is reproduced form the first recording layer 3 during the period between P₁₂ and time P₁₃, which precedes and follows the time P₂₂, respectively. Further, a fourth signal is reproduced form the second recording layer 6 during the period between P₂₂ and time P₂₃, which precedes and follows the time P₁₃, respectively.

The signals read from the first recording layer 3 and second recording layer 6 at the data-reproducing time illustrated in FIG. 8A are supplied to the signal-reading section 32. The section 32 processes these signals at the timing described above.

The signal-reading section 32 outputs a layer identification signal to the CPU 37 before it outputs the signals read from the layers 3 and 6. The layer identification signal designates the first recording layer 3 or the second recording layer 6. In accordance with the layer identification signal, the CPU 37 controls the buffer management section 36, which controls the timing of writing data into the buffer memories 33 and 34 and the timing of reading data therefrom.

The timing of writing data into the buffer memories 33 and 34 are the same as the data-reproducing timing shown in FIG. 8A or the data-reading timing at the signal-reading section 32. By contrast, the data is read from the buffer memories 33 and 34 every time the data stored in the buffer memory 33 or the buffer memory 34 increases to a predetermined amount. Theoretically, data can read from the two-layered optical disk 1 at a high speed, such as twice the normal speed, and can be written into the buffer memories 33 and 34 at the high speed. When the data read from one recording layer is stored in one buffer memory to a predetermined amount, data may be read from the other recording layer and multiplexed with the data stored in the buffer memory. To read data from the first and second recording layers at the normal speed, the optical disk 1 must be rotated at twice the normal speed, even if the time required for switching one layer to the other is not taken into consideration. In practice, it is necessary to drive the spindle motor 40 at a speed four times as high as the normal speed.

Controlled by the CPU 37, the pickup 31 applies the data-reproducing laser beam to the first recording layer 3 or the second recording layer 6. The reproduction of data may be switched, from the first layer 3 to the second layer 6 and vice versa, at the timing illustrated in FIG. 8B. In the switching mode shown in FIG. 8B, data is reproduced from the first layer 3 during a period between time P11 and time P₁₂. Next, data is reproduced from the second layer 6 during a period between time P₂₁ and time P₂₂, which precedes the time P₁₂ and coincides with the time P₁₂, respectively. Then, data is reproduced from the first layer 3 during a period between time P₁₂ and time P₁₃, which coincides with the time P₂₂ and follows the P₂₂, respectively. Further, data is reproduced from the second layer 6 during a period between time P₂₂ and time P₂₃, which coincides the time P₁₂ and the time P₁₃, respectively.

The signals read from the first recording layer 3 and second recording layer 6 at the timing illustrated in FIG. 8B are supplied to the signal-reading section 32. The signal-reading section 32 processes these signals at the timing described above.

FIG. 8C shows the timing of switching the process of reproducing data from a five-layered optical disk, from one layer to another and vice versa. The five-layered optical disk, which is another embodiment of the present invention, has five recording layers.

The reproducing of data from each of the second to fifth layers is started at a time preceding the time (time P₁₂, P₂₂, P₃₂, or P₄₂) when the reproducing of data from the immediately preceding recording layer ends. The reproducing of data from the second layer lasts until time P₂₂ that coincides with time P₁₂ when the reproducing of data from the first layer ends. The reproducing of data from the third layer lasts until time P₃₂ that coincides with time P₂₂ when the reproducing of data from the second layer ends. The reproducing of data from the fourth layer lasts until time P₄₂ that coincides with time P₃₂ when the reproducing of data from the third layer ends. The timing of reproducing the fifth layer is different. That is, the reproducing of data from the fifth layer lasts until time P₅₂ that follows the time P₅₂ when the reproducing of data from the fourth layer ends.

The reproducing apparatus 30 can reproduce digital audio signals having the sampling frequency of 88.2 KHz, too, and representing sound of high quality. The audio data reproduced from each recording layer can alone provide audio signals that represent music. In addition, one and the same signal-processing circuit can process the signals reproduced from the first recording layer 3 and also the signals reproduced from the second recording layer 6. The reproducing apparatus 30 has a mode-selecting key, which is operated to select a low-quality sound mode and a high-quality sound mode. In the low-quality sound mode, the audio data is reproduced from only one of the recording layers 3 and 6. In the high-quality sound mode, audio data is reproduced from both the first recording layer 3 and the second recording layers 6.

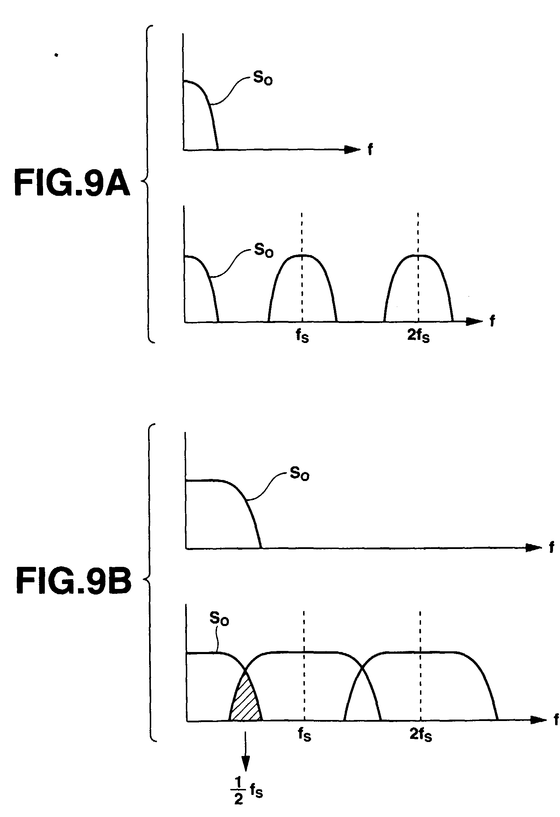

Assume that an analog audio signal S₀ shown in FIG. 9A is sampled at the sampling frequency of 88.2 KHz or more, generating digital audio data, and that the digital audio data is recorded on the two-layered optical disk 1 by the method described above. The reproducing apparatus of FIG. 4 or the reproducing apparatus of FIG. 7 may reproduce the digital audio data from the two-layered optical disk 1. Aliasing may occur in the analog audio signal S₀ as is indicated by broken lines in FIG. 8B. To prevent this, it is necessary to pass the analog audio signal S₀ through an LPF that has a cut-off frequency of, for example, 30 KHz. As is known in the art, aliasing is a disturbance to the fundamental wave. Nonetheless, the aliasing can be prevented if the analog audio signal S₀ is sampled at an appropriate frequency fs, as is illustrated in FIG. 9A. In the present invention, the audio signal S₀ is passed through an LPF before it is sampled to provide digital audio data.

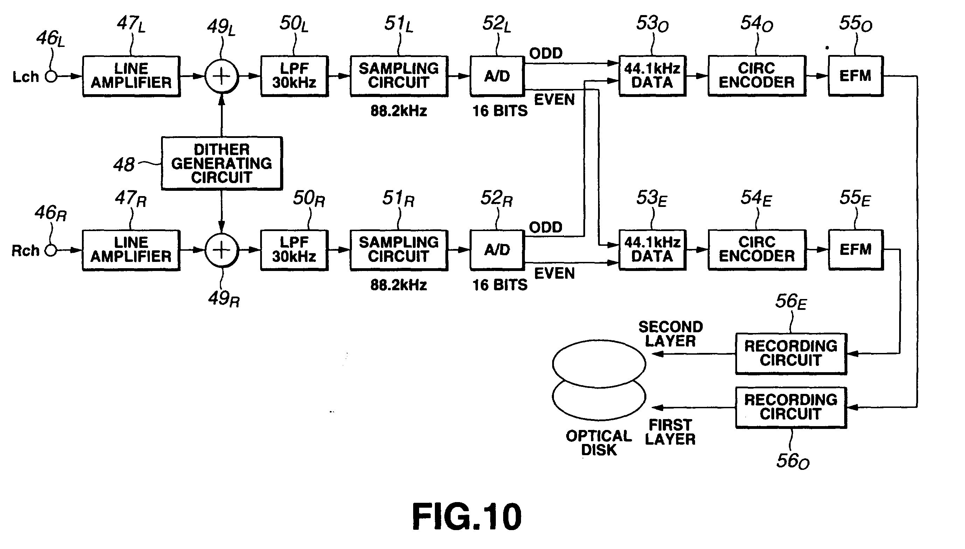

FIG. 10 shows a recording apparatus 45 according to the present invention, in which analog audio signals are passed through LPFs before they are subjected to sampling. The recording apparatus 45 is designed to perform three functions. First, the apparatus 45 samples two audio input signals for a two-channel stereophonic player, at a sampling frequency of 88.2 KHz, thereby generating digital audio data items Lch and digital audio data items Rch, each consisting of 16 bits. Secondly, the apparatus 45 divides the data items Lch into odd-numbered ones and even-numbered ones and, similarly, the data items Rch into odd-numbered ones and even-numbered ones. Thirdly, the apparatus 45 records the odd-numbered data items Lch and Rch which have a sampling frequency of 44.1 MHz on one layer of the two-layered optical disk 1, and the even-numbered data items Lch and Rch which have the sampling frequency of 44.1 MHz on one the other layer of the two-layered optical disk 1,

The audio signal Lch input to an input terminal 46_{L} is amplified by a line amplifier 47_{L}. The signal Lch amplified is supplied to an adder 49_{L}. The adder 49_{L} adds small random noise, i.e., dither, to the audio signal Lch. The dither has been supplied to the adder 49_{L} from a dither generating circuit 48. The audio signal Lch, now containing the dither, is supplied to an LPF 50_{L}. The filter out those components of the signal Lch which have frequencies equal to or less than 30 KHz. The audio signal Lch is then supplied to a sampling circuit 51_{L}.

The sampling circuit 51_{L} samples the output of the LPF 50_{L} at the frequency of 88.2 KHz. Aliasing may occur as indicated in FIG. 9B by the broken lines because the audio signal S₀ from the sound source has components having frequencies equal to 40 KHz or more as mentioned above. Nonetheless, aliasing does not occur during the sampling since the LPF 50_{L} that has the cut-off frequency of 30 KHz has filtered out those components. The data output from the sampling circuit 51_{L} is supplied to an A/D converter 52_{L}. The A/D converter 52_{L} converts the input data to 16-bit digital data. A data divider divides the digital data into odd-numbered data items and even-numbered data items as has been explained with reference to FIG. 4. Audio data having a sampling frequency of 44.1 KHz is thereby generated.

In the meantime, the audio signal Rch input to an input terminal 46_{R} is amplified by a line amplifier 47_{R}. The signal Rch amplified is supplied to an adder 49_{R}. The adder 49_{R} adds small random noise, i.e., dither, to the audio signal Lch. The dither has been supplied to the adder 49_{R} from a dither generating circuit 48. The audio signal Rch, now containing the dither, is supplied to an LPF 50_{R}. The filter out those components of the signal Rch which have frequencies equal to or less than 30 KHz. The audio signal Rch is then supplied to a sampling circuit 51_{R}.

The sampling circuit 51_{R} samples the output of the LPF 50_{R} at the frequency of 88.2 KHz. Aliasing may occur during this sampling. Nonetheless, aliasing does not occur since the LPF 50_{R} that has the cut-off frequency of 30 KHz has filtered out those components. The data output from the sampling circuit 51_{L} is supplied to an A/D convener 52_{R}. The A/D converter 52_{R} converts the input data to 16-bit digital data. A data divider divides the digital data into odd-numbered data items and even-numbered data items as has been explained with reference to FIG. 4. Audio data having a sampling frequency of 44.1 KHz is thereby generated.
[0065] same as [0061]
[0066] same as[0061]

The odd-numbered data items output from the A/D converter 52_{L} and the odd-numbered data items output from the A/D converter 52_{R} are stored, as 44.1 KHz data, into a buffer memory 53_{O}. The odd-numbered audio data items read from the buffer memory 53_{O} are supplied to an error-correcting/encoding circuit, or a CIRC encoder 54_{O}. The CIRC encoder 54_{O} performs, on the odd-numbered data items, cross interleaving and fourth-order Read-Solomon coding, by using the algorithm of CIRC.

A modulating circuit 55_{O} modulates the encoded data output from the CIRC encoder 54_{O}. The data modulated is supplied to a recording circuit 56_{O}. The recording circuit processes the data. One of the two pickups shown in FIG. 3 records the data, thus processed, on the first recording layer 3 of the two-layered optical disk 1.

Meanwhile, the even-numbered data items output from the A/D converter 52_{L} and the even-numbered data items output from the A/D converter 52_{R} are stored, as 44.1 KHz data, into a buffer memory 53_{E}. The odd-numbered audio data items read from the buffer memory 53_{E} are supplied to an error-correcting/encoding circuit, or a CIRC encoder 54_{E}. The CIRC encoder 54_{E} performs, on the odd-numbered data items, cross interleaving and fourth-order Read-Solomon coding, by using the algorithm of CIRC.

A modulating circuit 55_{E} modulates the encoded data output from the CIRC encoder 54_{E}. The data modulated is supplied to a recording circuit 56_{E}. The recording circuit processes the data. The other of the two pickups shown in FIG. 3 records the data, thus processed, on the first recording layer 6 of the two-layered optical disk 1.

The cut-off frequency of the LPF 50_{L} and LPF 50_{R} may range from 50% to 100% of the sampling frequency.

The LPF 50_{L} and LPF 50_{R} may be replaced by filters that reduce energy levels exceeding a predetermined frequency.

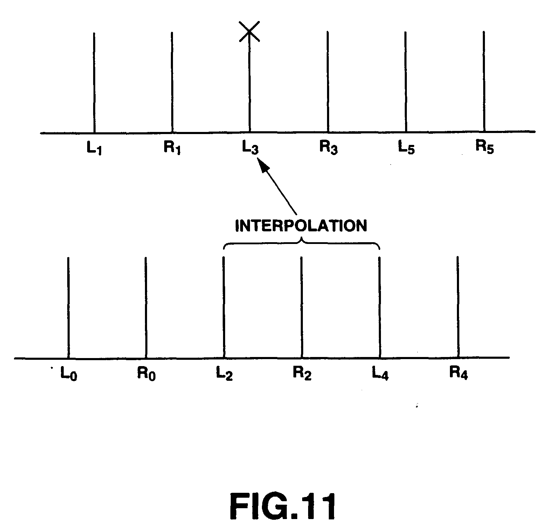

As described above, the error-interpolating circuit 25 of the reproducing apparatus 20 shown in FIG. 4 detects errors that the error-correcting circuits 23_{O} and 23_{E} have failed to correct. The circuit 25 interpolates these errors by using the data read from the other recording layer, as will be described in detail with reference to FIG. 11.

Assume that, as shown in FIG. 11, the recording apparatus 45 has recorded the odd-numbered data items L₁, R₁, L₃, R₃, L₅, R₅ of two-channel stereophonic audio data on the first recording layer 3 of the two-layered optical disk 1, and the even-numbered data items L₂, R₂, L₄, R₄, L₆, R₆ of the stereophonic audio data on the second recording layer 6 of the two-layered optical disk 1. If the odd-numbered data item L₃ has been lost for some reason and if this error cannot not be corrected, the error-interpolating circuit 25 generates a data item from, for example, the even-numbered data items L₂ and L₄ recorded on the second recording layer 6, thereby interpolating the odd-numbered data item L₃.

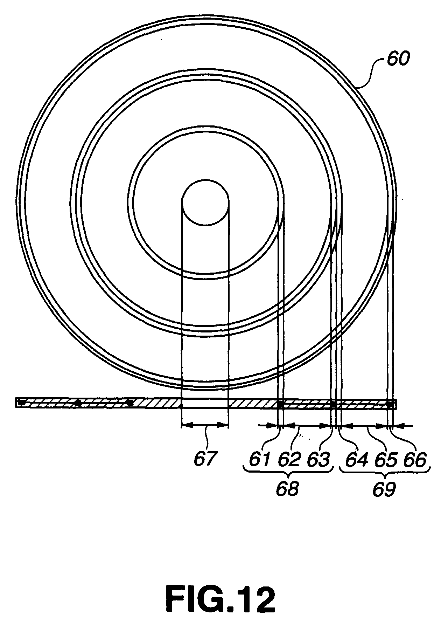

The recording medium thus far described is a two-layered optical disk 1. Nevertheless, an optical disk 60 shown in FIG. 12, which has two recording regions on one surface, may be used in the present invention.

The optical disk 60 has two recording regions 62 and 65. In the first recording region 62 there are recorded digital audio data items. In the second recording region 65 there are recorded digital audio data items. Each of the audio data items recorded in the first recording region 62 is every other data item generated by sampling an audio signal from a sound source at a sampling frequency of 88.2 KHz. The audio data items recorded on the second recording region 65 are the remaining ones so generated from the audio signal. Any digital audio data item recorded on the disk 60 consists of 16 bits.

The optical disk 60 further has two management regions 61 and 64. The first management region 61 is located on inner side of the first recording region 62 and is used to manage the digital audio data items recorded in the first recording region 62. The second management region 64 is located on inner side of the second recording region 65 and is used to manage the digital audio data items recorded in the second recording region 65.

The optical disk 60 has a center hole 67 made in its central part. The disk 60 further has two read-out regions 63 and 66. The first read-out region 63 is provided on the outer side of the first recording region 62. The second read-out region 66 is provided on the outer side of the second recording region 66. The first management region 61, first recording region 62 and first read-out region 63 constitute a first cession 68. The second management region 64, second recording region 65 and second read-out region 66 constitute a second cession 69.

The audio data recorded in the first recording region 62 consists of digital audio data items, each being every other data item generated by sampling the audio signal at the sampling frequency of 88.2 KHz, and the audio data items recorded on the second recording region 65 are the remaining ones so generated from the audio signal. Therefore, the audio data recorded in either recording region has a sampling frequency of 44.1 KHz.

The audio data recorded in either recording region can be reproduced by the conventional CD players. The audio signal reproduced from either recording region can alone provide audio signals that represent music. Moreover, the same signal-processing circuit can process the signals reproduced from the first recording region 62 and also the signals reproduced from the second recording region 65. Even if a CD player fails to read audio signals from both recording regions 62 and 65, the audio signals read from only one recording region will represent full and complete music.

According to the present invention, full-time playback of 80 minutes (or 74 minutes) can be achieved, particularly with the two-layered optical disk, by means of the conventional CD player.

Only half the audio data recorded on the two-layered optical disk, i.e., the audio data recorded on one recording layer, can be copied on CR-Rs or CD-RWs. This helps to protect the copyright to the audio data recorded on the two-layered optical disk. Copyright-protecting signals, such as water marks, can be written at a frequency of about 30 KHz.

As has been explained, the two-layered optical disk 1 and the optical disk 60 are disks on which audio data is recorded. Instead, video data may be recorded on the disks 1 and 60, in which case the recording apparatus will comprise frame-forming means, frame-dividing means, signal-processing means, and recording means. The frame-forming means processes the video data, generating frame data items, each having a frequency n times as high as a prescribed frame frequency. The frame-dividing means divides the frame data items supplied from the frame-forming means, into n trains of digital data items. Any item of each train is an n-th frame data item. The signal-processing means performs signal process on the n trains of digital data items output from the frame-dividing means, so that the trains of digital data items may be recorded on the optical disk. The recording means records the n trains of digital data items on the n recording regions of a data-recording medium, respectively, so that the digital data items of any trains may not overlap the digital data items of other trains.

In this case, the reproducing apparatus will comprise reading means and control means. The reading means reads the video signals from the n recording regions of the data-recording medium. The control means controls the other components of the recording apparatus so that the signals may be reproduced from each of the n recording regions of the medium or the signals recorded in at least two recording regions may be mixed and reproduced. If this is the case, the reproducing apparatus has a data-reproducing mode key, which is operated to select the high-quality image reproducing mode and the low-quality image reproducing mode.

## Claims

1. A recording medium having n recording regions (n is an integer defined as: n ≥ 2) in which n trains of sampled data items are recorded, respectively, such that the sampled data items of any train may not overlap the sampled data items of other trains, said sampled data items having been generated by sampling and quantizing an input analog audio signal at a sampling frequency of n × fs (KHz), and any sampled data item of each train being an n-th item generated from the input analog audio signal.

2. The recording medium according to claim 1, wherein fs = 44.1 (KHz).

3. The recording medium according to claim 1, wherein n = 2.

4. The recording medium according to claim 1, wherein the input analog audio signal has been subjected a filtering process of cutting off those components of the signal which have predetermined frequencies to suppress generation of aliasing.

5. The recording medium according to claim 1, wherein the input analog audio signal has a low energy level at a frequency equal to or higher than a prescribed frequency.

6. A recording medium having n recording regions (n is an integer defined as: n ≥ 2) in which n trains of sampled data items are recorded, respectively, such that the sampled frame data items of any train may not overlap the sampled frame data items of other trains, said sampled frame data items having been generated by sampling and quantizing an input analog video signal at a sampling frequency of n × fs (KHz) (where fs is frame frequency) and any sampled frame data item of each train being an n-th frame generated from the input analog video signal.

7. The recording medium according to claim 6, wherein n = 2.

8. The recording medium according to claim 6, wherein the input analog audio signal has been subjected a filtering process of cutting off those components of the signal which have predetermined frequencies to suppress generation of aliasing.

9. The recording medium according to claim 6, wherein the input analog audio signal has a low energy level at a frequency equal to or higher than a prescribed frequency.

10. A reproducing apparatus for reproducing an audio signal from a recording medium having n recording regions (n is an integer defined as: n ≥ 2) in which n trains of sampled data items are recorded, respectively, such that the sampled data items of any train may not overlap the sampled data items of other trains, said sampled data items having been generated by sampling and quantizing an input analog audio signal at a sampling frequency of n × fs (KHz), and any sampled data item of each train being an n-th item generated from the input analog audio signal, said apparatus comprising:
selecting means for selecting a high-quality sound reproducing mode and a low-quality sound reproducing mode;
reproducing means for reproducing the analog audio signal from the n recording regions of the recording medium; and
control means for controlling the reproducing means so that the reproducing means reproduces the analog audio signal from the trains of sampled data items recorded in m desired recording regions (m is an integer defined as: 2 ≤ m ≤ n) of the recording medium when a user selected the high-quality sound reproducing mode, and reproduces the analog audio signal from the trains of sampled data items recorded in k desired recording regions (k is an integer defined as: 1 ≤ k ≤ m) of the recording medium when the user selected the low-quality sound reproducing mode.

11. The reproducing apparatus according to claim 10, further comprising mixing means for mixing the trains of sampled data items reproduced from the m desired recording regions (m is an integer defined as: 2 ≤ m ≤ n) of the recording medium.

12. The reproducing apparatus according to claim 10, further comprising mixing means for mixing the trains of sampled data items reproduced from the k desired recording regions (k is an integer defined as: 1 ≤ k ≤ m) of the recording medium.

13. The reproducing apparatus according to claim 10, the reproducing means comprises a plurality of reproducing heads.

14. The reproducing apparatus according to claim 10, in which the reproducing means comprises a single reproducing head, and which further comprises memory means for temporarily storing the trains of sampled data items reproduced by the reproducing head from each recording region and memory control means for controlling the memory means so that the trains of sampled data items may be written into the memory means faster than is read from the memory means.

15. The reproducing apparatus according to claim 10, wherein one of the trains of sampled data items reproduced by the reproducing means from the m desired recording regions (m is an integer defined as: 2 ≤ m ≤ n) of the recording medium, or a part of the train, is interpolated with any other train, when the train or that part thereof has been lost.

16. The reproducing apparatus according to claim 10, wherein n = 2 and m = 2, the reproducing means reproduces a predetermined length of the train of sampled data items recorded in a second recording region after reproducing a predetermined length of the train of sampled data items recorded in a first recording region associated with the second recording region, and the reproducing means reproduces again the train of sampled data items recorded in the first recording region after reproducing the predetermined length of the train of sampled data items recorded in the second recording region.

17. A reproducing apparatus for reproducing a video signal from a recording medium having n recording regions (n is an integer defined as: n ≥ 2) in which n trains of sampled data items are recorded, respectively, such that the sampled frame data items of any train may not overlap the sampled frame data items of other trains, said sampled frame data items having been generated by sampling and quantizing an input analog video signal at a sampling frequency of n × fs (KHz) (where fs is frame frequency) and any sampled frame data item of each train being an n-th frame generated from the input analog video signal, said apparatus comprising:
selecting means for selecting a high-quality image reproducing mode and a low-quality image reproducing mode;
reproducing means for reproducing the analog video signal from the n recording regions of the recording medium; and
control means for controlling the reproducing means so that the reproducing means reproduces the analog video signal from the trains of sampled frame data items recorded in m desired recording regions (m is an integer defined as: 2 ≤ m ≤ n) of the recording medium when a user selected the high-quality image reproducing mode, and reproduces the analog video signal from the trains of sampled fame data items recorded in k desired recording regions (k is an integer defined as: 1 ≤ k ≤ m) of the recording medium when the user selected the low-quality image reproducing mode.

18. The reproducing apparatus according to claim 17, further comprising mixing means for mixing the trains of sampled frame data items reproduced from the m desired recording regions (m is an integer defined as: 2 ≤ m ≤ n) of the recording medium.

19. The reproducing apparatus according to claim 17, further comprising mixing means for mixing the trains of sampled frame data items reproduced from the k desired recording regions (k is an integer defined as: 1 ≤ k ≤ m) of the recording medium.

20. The reproducing apparatus according to claim 17, the reproducing means comprises a plurality of reproducing heads.

21. The reproducing apparatus according to claim 17, in which the reproducing means comprises a single reproducing head, and which further comprises memory means for temporarily storing the trains of sampled frame data items reproduced by the reproducing head from each recording region and memory control means for controlling the memory means so that the trains of sampled frame data items may be written into the memory means faster than is read from the memory means.

22. The reproducing apparatus according to claim 17, wherein one of the trains of sampled frame data items reproduced by the reproducing means from the m desired recording regions (m is an integer defined as: 2 ≤ m ≤ n) of the recording medium, or a part of the train, is interpolated with any other train, when the train or that part thereof has been lost.

23. The reproducing apparatus according to claim 17, wherein n = 2 and m = 2, the reproducing means reproduces a predetermined length of the train of sampled frame data items recorded in a second recording region after reproducing a predetermined length of the train of sampled frame data items recorded in a first recording region associated with the second recording region, and the reproducing means reproduces again the train of sampled frame data items recorded in the first recording region after reproducing the predetermined length of the train of sampled frame data items recorded in the second recording region.

24. A reproducing method of reproducing an audio signal from a recording medium having n recording regions (n is an integer defined as: n ≥ 2) in which n trains of sampled data items are recorded, respectively, such that the sampled data items of any train may not overlap the sampled data items of other trains, said sampled data items having been generated by sampling and quantizing an input analog audio signal at a sampling frequency of n × fs (KHz), and any sampled data item of each train being an n-th item generated from the input analog audio signal, said apparatus comprising:
a step of reproducing trains of sampled data items from in desired recording regions (m is an integer defined as: 2 ≤ m ≤ n) of the recording medium when a user selected the high-quality sound reproducing mode; and
a step of reproducing trains of sampled data items form k desired recording regions (k is an integer defined as: 1 ≤ k ≤ m) of the recording medium when the user selected the low-quality sound reproducing mode.

25. A reproducing method of reproducing a video signal from a recording medium having n recording regions (n is an integer defined as: n ≥ 2) in which n trains of sampled data items are recorded, respectively, such that the sampled frame data items of any train may not overlap the sampled frame data items of other trains, said sampled frame data items having been generated by sampling and quantizing an input analog video signal at a sampling frequency of n × fs (KHz) (where fs is frame frequency) and any sampled frame data item of each train being an n-th frame generated from the input analog video signal, said apparatus comprising:
a step of reproducing the analog video signal from the trains of sampled frame data items recorded in m desired recording regions (m is an integer defined as: 2 ≤ m ≤ n) of the recording medium when a user selected the high-quality image reproducing mode; and
a step of reproducing the analog video signal from the trains of sampled fame data items recorded in k desired recording regions (k is an integer defined as: 1 ≤ k ≤ m) of the recording medium when the user selected the low-quality image reproducing mode.

26. A recording apparatus for recording an audio signal on a recording medium having n recording regions (n is an integer defined as: n ≥ 2), said apparatus comprising:
sampling means for sampling and quantizing an input analog audio signal at a sampling frequency of n x fs (KHz), generating trains of sampled data items;
data-dividing means for dividing the trains of sampled data items generated by the sampling means, thereby forming n trains of sampled data items, any sampled data item of each train thus formed being an n-th item generated from the input analog audio signal;
signal-processing means for processing each of the n trains of sampled data items formed by the data-dividing means; and
recording means for recording the n trains of sampled data items processed by the signal-processing means, in the n recording regions (n is an integer defined as: n ≥ 2), respectively.

27. The recording apparatus according to claim 26, wherein fs = 44.1 (KHz).

28. The recording apparatus according to claim 26, wherein n = 2.

29. The recording medium according to claim 26, wherein the input analog audio signal has been subjected a filtering process of cutting off those components of the signal which have predetermined frequencies to suppress generation of aliasing.

30. The recording medium according to claim 26, wherein the input analog audio signal has a low energy level at a frequency equal to or higher than a prescribed frequency.

31. A recording apparatus for recording a video signal on a recording medium having n recording regions (n is an integer defined as: n ≥ 2), said apparatus comprising:
frame-forming means for sampling and quantizing an input analog video signal at a sampling frequency of n × fs (KHz), generating trains of sampled frame data items;
data-dividing means for dividing the trains of sampled frame data items generated by the frame-forming means, thereby forming n trains of sampled frame data items, any sampled frame data item of each train thus formed being an n-th item generated from the input analog audio signal;
signal-processing means for processing each of the n trains of sampled frame data items formed by the data-dividing means; and
recording means for recording the n trains of sampled frame data items processed by the signal-processing means, in the n recording regions (n ≥ 2), respectively.

32. The recording apparatus according to claim 31, wherein fs = 44.1 (KHz).

33. The recording apparatus according to claim 31, wherein n = 2.

34. The recording apparatus according to claim 31, wherein the input analog video signal has been subjected a filtering process of cutting off those components of the signal which have predetermined frequencies to suppress generation of aliasing.

35. The recording apparatus according to claim 31, wherein the input analog video signal has a low energy level at a frequency equal to or higher than a prescribed frequency.

36. A recording method of recording an audio signal on a recording medium having n recording regions (n is an integer defined as: n ≥ 2), said method comprising:
a step of sampling and quantizing an input analog audio signal at a sampling frequency of n × fs (KHz), generating trains of sampled data items;
a step of dividing the trains of sampled data items generated by the sampling means, thereby forming n trains of sampled data items, any sampled data item of each train thus formed being an n-th item generated from the input analog audio signal;
a step of processing each of the n trains of sampled data items formed by the data-dividing means; and
a step of recording the n trains of sampled data items processed by the signal-processing means, in the n recording regions (n is an integer defined as: n ≥ 2), respectively.

37. A recording method of recording a video signal on a recording medium having n recording regions (n is an integer defined as: n ≥ 2), said method comprising:
a step of sampling and quantizing an input analog video signal at a sampling frequency of n × fs (KHz), generating trains of sampled data items;
a step of dividing the trains of sampled video data items generated by the sampling means, thereby forming n trains of sampled frame data items, any sampled frame data item of each train thus formed being an n-th item generated from the input analog video signal;
a step of processing each of the n trains of sampled frame data items formed by the data-dividing means; and
a step of recording the n trains of sampled frame data items processed by the signal-processing means, in the n recording regions (n is an integer defined as: n ≥ 2), respectively.
